# FASCICULE DE BREVET EUROPEEN

(11) **EP 4 277 819 B1**
(45) Date de publication et mention de la délivrance du brevet: **07.05.2025**
(21) Numéro de dépôt: 21840074.5
(22) Date de dépôt: 01.12.2021
(51) Int. Cl.: B60W 30/09, B60W 30/095, B60W 10/184, B60W 10/20, B60Q 9/00

(54) **PROCÉDÉ DE FONCTIONNEMENT D'UN DISPOSITIF ANTICOLLISION POUR VÉHICULE AUTOMOBILE**
BETRIEBSVERFAHREN EINER KOLLISIONSSCHUTZVORRICHTUNG FÜR EIN KRAFTFAHRZEUG
OPERATING METHOD OF AN ANTI-COLLISION DEVICE FOR A MOTOR VEHICLE

(30) Priorité: 13.01.2021 FR 2100269
(43) Date de publication de la demande: 22.11.2023
(73) Titulaire: Stellantis Auto SAS, 78300 Poissy (FR)
(72) Inventeur: ABOULISSANE, Badreddine, 83350 TAROUDANT (MA); ABOUESSIRE, Ismail, 40160 Marrakech (MA)
(74) Mandataire: ESIP
(86) Numéro de dépôt international: PCT/FR2021/052158
(87) Numéro de publication internationale: WO 2022/152982

(56) Documents cités:
- DE-A1- 102011 106 485
- US-A1- 2013 321 172
- US-A1- 2018 357 903
- US-A1- 2020 331 466

## Description

La présente invention revendique la priorité de la demande française 2100269 déposée le 13.01.2021.

### [Domaine technique]

La présente invention concerne d'une manière générale la problématique de la sécurité dans les véhicules automobiles. Elle vise en particulier un dispositif anticollision pour un tel véhicule automobile.

### [Technique antérieure]

Il est bien connu de l'art antérieur d'équiper certains véhicules automobiles d'un dispositif anticollision d'un véhicule hôte avec un objet mobile en approche se déplaçant en sens inverse sur une voie adjacente.

De tels dispositifs anticollision sont prévus généralement pour commander l'exécution par le véhicule hôte d'une réponse d'évitement lorsqu'un risque de collision avec un tel objet mobile est identifié.

Le document EP 2 643 829 A1 propose ainsi d'effectuer automatiquement une intervention sur le système de freinage de véhicule et/ou sur son système de direction.

On connait par le document US 2018/357903 A1 un dispositif de contrôle de véhicule pour éviter une collision. On connait par le document US 2013/321172 A1 un dispositif et procédé d'aide au déplacement d'un véhicule. On connait par le document US 2013/321172 A1 un autre un dispositif et procédé de contrôle de véhicule pour éviter une collision.

D'une manière générale, la fiabilité de fonctionnement de ces dispositifs anticollision dépend essentiellement de la qualité de détection du risque de collision.

Le document US 7,885,766 divulgue un dispositif anticollision pour automobile comportant :
- un module de détection apte à identifier les objets présents au devant du véhicule hôte ainsi qu'à déterminer leur position et leur vitesse relatives vis-à-vis dudit véhicule hôte ;
- un module d'évaluation du contexte environnemental de conduite apte à identifier, à partir des données fournies par le module de détection, l'existence d'un risque de collision entre ledit véhicule hôte et un objet mobile en approche se déplaçant en sens inverse au sens de déplacement dudit véhicule hôte sur une voie adjacente à sa voie de circulation ; et
- un module d'actionnement apte à commander, en cas d'identification d'un risque de collision par ledit module d'évaluation du contexte environnemental de conduite, l'exécution par ledit véhicule hôte d'une réponse d'évitement destinée à éviter la survenance d'une telle collision.

Pour identifier un risque de collision, le module d'évaluation détermine si le véhicule hôte ou l'objet mobile en approche se déplaçant en sens inverse sur une voie adjacente a dévié de la route appropriée en se basant sur l'angle formé entre la trajectoire de ce véhicule hôte et celle de l'objet mobile en approche.

Lorsqu'une telle déviation est identifiée, l'existence d'un risque de collision avec l'objet mobile en approche est ensuite déterminé en fonction de la valeur de cet angle, de la distance relative et/ou de la vitesse relative entre les deux véhicules, et de leurs trajectoires respectives.

Une telle méthode de détection basée sur l'identification d'une éventuelle déviation à partir de l'angle formé entre la trajectoire de ce véhicule hôte et celle de l'objet mobile en approche peut toutefois amener à une mauvaise évaluation du risque de collision dans l'éventualité où ces derniers dévient simultanément de leurs routes respectives.

En effet, dans un tel cas de figure, le véhicule hôte et l'objet mobile en approche peuvent continuer à présenter des trajectoires sensiblement parallèles ce qui sera interprété par le dispositif comme une situation normale dans laquelle aucun d'eux n'a dévié de la route appropriée.

### [Exposé de l'invention]

La présente invention vise donc à améliorer la situation.

Elle propose à cet effet un dispositif anticollision pour véhicule automobile comportant :
- un module de détection apte à identifier les objets présents au devant du véhicule hôte ainsi qu'à déterminer leur position et leur vitesse relatives vis-à-vis dudit véhicule hôte ;
- un module d'évaluation du contexte environnemental de conduite apte à identifier, à partir des données fournies par le module de détection, l'existence d'un risque de collision entre ledit véhicule hôte et un objet mobile en approche se déplaçant en sens inverse au sens de déplacement dudit véhicule hôte sur une voie adjacente à sa voie de circulation ; et
- un module d'actionnement apte à commander, en cas d'identification d'un risque de collision par ledit module d'évaluation du contexte environnemental de conduite, l'exécution par ledit véhicule hôte d'une réponse d'évitement destinée à éviter la survenance d'une telle collision ;

ledit module de détection étant également apte à détecter la ligne de démarcation séparant la voie de circulation dudit véhicule hôte de celle dudit objet mobile,
ledit module d'évaluation étant configuré de sorte à identifier l'existence d'un risque de collision lorsque ledit véhicule hôte franchit une première marge virtuelle de sécurité s'étendant latéralement du côté interne de sa voie de circulation depuis ladite ligne de démarcation, ou lorsque ledit objet mobile en approche franchit une seconde marge virtuelle de sécurité s'étendant latéralement du côté interne de sa voie de circulation depuis ladite ligne de démarcation.

La définition de marges virtuelles de sécurité s'étendant latéralement de part et d'autre de la ligne de démarcation séparant la voie de circulation dudit véhicule hôte de celle dudit objet mobile en approche, permet d'identifier avec une excellente fiabilité les risques de survenance de collision entre le véhicule hôte et tout objet mobile en approche se déplaçant en sens inverse au sens de déplacement dudit véhicule hôte sur une voie adjacente à sa voie de circulation.

Selon une caractéristique avantageuse, au moins l'une desdites première et seconde marges virtuelles de sécurité présente une largeur fixe.

Selon l'invention, au moins l'une desdites première et seconde marges virtuelles de sécurité présente une largeur évolutive suivant une fonction de la distance entre ledit véhicule hôte et ledit objet mobile en approche.

De préférence décroissante, cette fonction est par exemple de type affine ou polynomiale de deuxième ou de troisième degré.

De manière avantageuse, ladite réponse d'évitement est différenciée suivant que l'identification de l'existence d'un risque de collision est due au franchissement par ledit véhicule hôte de ladite première marge virtuelle de sécurité ou au franchissement par ledit objet mobile en approche de ladite seconde marge virtuelle de sécurité.

En cas de franchissement par ledit véhicule hôte de ladite première marge virtuelle de sécurité ou en cas de franchissement par ledit objet mobile en approche de ladite seconde marge virtuelle de sécurité, ledit module d'actionnement est avantageusement configuré de sorte à déterminer l'intensité du couple volant à exercer sur le système de direction dudit véhicule hôte pour corriger sa trajectoire de sorte à éviter la collision.

Ce module d'actionnement est de préférence également configuré de sorte à :
- en cas de franchissement par ledit véhicule hôte de ladite première marge virtuelle de sécurité, appliquer systématiquement ledit couple volant sur le système de direction dudit véhicule hôte; et
- en cas de franchissement par ledit objet mobile en approche de ladite seconde marge virtuelle de sécurité, appliquer ledit couple volant sur le système de direction dudit véhicule hôte seulement si ce couple volant est inférieur ou égal à une valeur seuil prédéterminée, et commander l'émission d'un appel de phare par ledit véhicule hôte pendant un délai prédéterminé lorsque ce même couple volant est supérieur à ladite valeur seuil.

Ledit module d'actionnement est également configuré préférentiellement pour commander l'application d'un freinage automatique d'urgence sur ledit véhicule hôte lorsque ledit objet mobile en approche mord toujours sur ladite seconde marge virtuelle de sécurité au terme dudit délai,

### [Brève description des dessins]

L'exposé de l'invention sera maintenant poursuivi par la description détaillée d'un exemple de réalisation, donnée ci-après à titre illustratif mais non limitatif, en référence aux dessins annexés, sur lesquels :
[Fig 1] représente un véhicule équipé du dispositif anticollision selon l'invention roulant sur une voie de circulation d'une route à double sens de circulation et s'apprêtant à croiser un autre véhicule circulant en sens inverse sur une voie de circulation adjacente ; et
[Fig 2] illustre le schéma fonctionnel du dispositif anticollision selon l'invention.

### [Description détaillée]

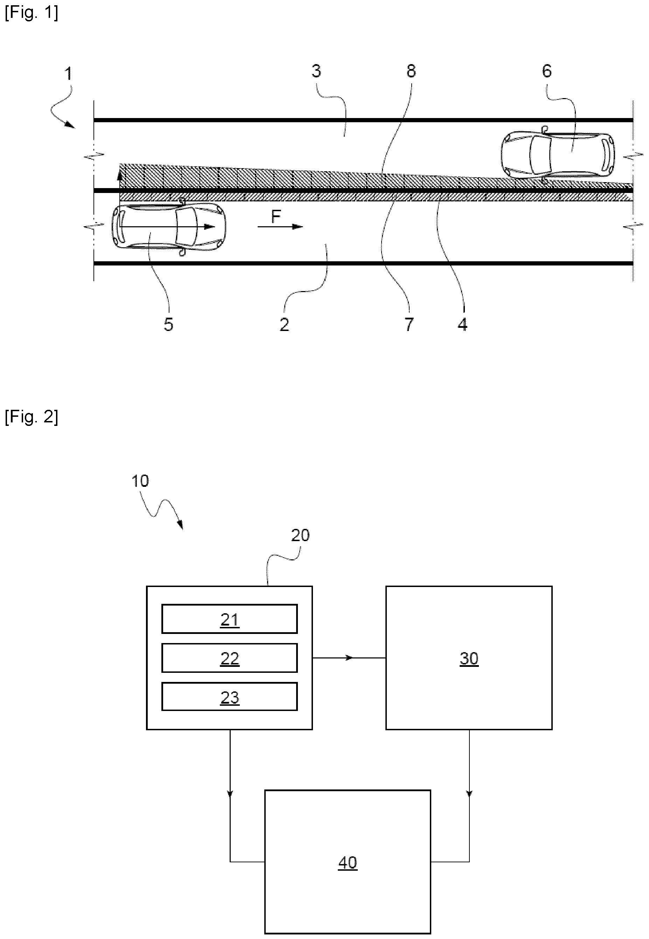

La figure 1 illustre schématiquement un tronçon d'une route à double sens de circulation 1 comportant deux voies de circulation 2, 3 accolées l'une à l'autre et séparées par une ligne de démarcation 4.

Un premier véhicule hôte 5 roulant sur la voie de circulation 2 dans la direction représentée par la flèche F s'apprête à croiser un autre véhicule 6 circulant en sens inverse sur la voie de circulation 3.

Le véhicule hôte 5 est équipé d'un dispositif anticollision selon l'invention 10 destiné à éviter la survenance d'une collision avec un objet mobile en approche se déplaçant en sens inverse sur une voie adjacente.

Le dispositif 10, dont le schéma fonctionnel est représenté sur la figure 2, comporte un module de détection 20, un module d'évaluation du contexte environnemental de conduite 30, ainsi qu'un module d'actionnement 40.

Le module de détection 20 comprend au moins un capteur radar 21 positionné en partie avant du véhicule hôte 5 de sorte à détecter les objets situés dans son environnement avant.

Le capteur 21 est par exemple constitué par un radar Doppler à balayage et à longue portée émettant de façon périodique un faisceau signal sur un secteur angulaire prédéterminé. Ce capteur radar 21 présente classiquement une portée comprise entre 200 et 250 mètres, de sorte qu'il puisse détecter la présence d'objets suffisamment en amont du véhicule.

De préférence, le capteur radar 21 fonctionne à une fréquence de 24 GHz car celle-ci est capable de passer à travers un grand nombre de matériaux plastiques sans causer d'interférences significatives. La majorité des pare-chocs avant des véhicules étant actuellement fabriqués dans ce matériau, l'utilisation de la fréquence 24 GHz permet de monter un tel capteur radar juste derrière le pare-choc de sorte que ce dernier soit invisible et protégé des agressions extérieures.

En variante, le type, la fréquence, le positionnement, la portée et/ou le secteur angulaire du capteur peuvent être différents.

Le capteur peut par exemple être constitué par un lidar, un capteur laser, ou bien encore un capteur à ultrasons.

Le module de détection 20 comporte également au moins une caméra vidéo 22 positionnée également en partie avant du véhicule hôte 5 de sorte à capturer en continu l'environnement avant du véhicule.

Implantée avantageusement sur l'axe longitudinal médian du véhicule hôte 5 en arrière du pare-brise et à proximité du rétroviseur intérieur, la caméra 22 comprend par exemple un capteur optique de type CCD (acronyme en langue anglaise de « Charge-Coupled Device » se traduisant en français par « dispositif à couplage de charge ») ou CMOS (acronyme en langue anglaise de « Complementary Metal-Oxide Semiconductor » se traduisant en français par « semi-conducteur à oxyde de métal complémentaire »).

Selon des variantes non représentées, la caméra peut être implantée en un autre endroit du véhicule hôte 5, par exemple au niveau de son pare-choc avant.

Selon d'autres variantes de réalisation de l'invention, les moyens d'acquisition vidéo du dispositif peuvent comporter deux caméras disposées des deux côtés avant du véhicule, par exemple au niveau des rétroviseurs.

Le module de détection 20 comprend également des moyens de traitement 23 aptes à identifier en temps réel, à partir des données transmises par le capteur radar 21, les objets présents au devant du véhicule hôte 5 (dont en particulier le véhicule 6) ainsi qu'à déterminer leur position et leur vitesse relatives vis-à-vis de ce véhicule hôte 5.

Ces moyens de traitement 23 sont également aptes à détecter en temps réel et par l'intermédiaire de différents algorithmes de reconnaissance, les lignes de marquage au sol (dont en particulier la ligne de démarcation 4 séparant la voie de circulation 2 du véhicule hôte 5 de la voie de circulation 3 de l'objet mobile 6 à partir des images transmises par la caméra 22.

Le module d'évaluation du contexte environnemental de conduite 30 est apte à identifier, à partir des données fournies par le module de détection 20, l'existence d'un risque de collision entre le véhicule hôte 5 et un objet mobile en approche (telle véhicule 6) se déplaçant en sens inverse au sens de déplacement de ce véhicule hôte 5 sur une voie adjacente 3 à sa voie de circulation 2.

Selon l'invention, l'existence d'un tel risque de collision est identifiée dès lors que l'une des deux conditions suivantes est remplie :
- le véhicule hôte 5 franchit une première marge virtuelle de sécurité 7 s'étendant latéralement du côté interne de la voie de circulation 2 de ce véhicule hôte 5 depuis la ligne de démarcation 4, ou
- l'objet mobile 6 en approche franchit une seconde marge virtuelle de sécurité 8 s'étendant latéralement du côté interne de la voie de circulation 3 de cet objet mobile 6 depuis la ligne de démarcation 4.

De manière avantageuse, la première marge virtuelle de sécurité 7 présente une largeur fixe dont la valeur est comprise par exemple entre 0,5 et 0,8 mètres.

La largeur de la seconde marge virtuelle de sécurité 8 évolue quant à elle de préférence suivant une fonction de la distance entre le véhicule hôte 5 et l'objet mobile 6 en approche, par exemple de type affine ou polynomiale de deuxième ou troisième degré.

Cette fonction est avantageusement décroissante de sorte que la largeur de cette seconde marge 8 augmente au fur et à mesure que l'objet mobile 6 se rapproche du véhicule hôte 5, ce qui permet de tenir compte de l'augmentation du risque de collision lorsque la distance entre ce véhicule hôte 5 et cet objet mobile 6 diminue.

Le module d'actionnement 40 comporte une pluralité d'actionneurs aptes à agir notamment sur la direction, le système d'éclairage et de signalisation, ainsi que sur le système de freinage du véhicule.

En cas d'identification d'un risque de collision par le module d'évaluation du contexte environnemental de conduite 30, ce module d'actionnement 40 est apte à commander l'exécution par le véhicule hôte 5 d'une réponse d'évitement destinée à éviter la survenance d'une telle collision.

Cette réponse d'évitement est avantageusement différenciée suivant que l'identification de l'existence d'un risque de collision est due au franchissement par le véhicule hôte 5 de la première marge virtuelle de sécurité 7 ou au franchissement par l'objet mobile en approche 6 de la seconde marge virtuelle de sécurité 8.

Plus précisément, en cas de franchissement par le véhicule hôte 5 de la première marge virtuelle de sécurité 7 s'étendant latéralement du côté interne de sa voie de circulation 2, le module d'actionnement 40 détermine l'intensité du couple volant à exercer sur le système de direction du véhicule hôte 5 pour corriger sa trajectoire de sorte à éviter la collision. Ce couple volant est alors systématiquement appliqué sur le système de direction du véhicule hôte 5 par l'intermédiaire de l'actionneur adéquat.

En cas de franchissement par l'objet mobile en approche 6 de la seconde marge virtuelle de sécurité 8 s'étendant latéralement du côté interne de sa voie de circulation 3, le module d'actionnement 40 détermine l'intensité du couple volant à exercer sur le système de direction du véhicule hôte 5 pour corriger sa trajectoire de sorte à éviter la collision.

Dans le cas où ce couple volant est inférieur ou égal à une valeur seuil prédéterminée (comprise par exemple entre 1 et 2 N/m et avantageusement configurable), ce couple volant est appliqué sur le système de direction du véhicule hôte 5 par l'intermédiaire de l'actionneur adéquat.

Dans le cas inverse où ce couple volant est supérieur à cette valeur seuil, le module d'actionnement 40 estime que son application pourrait entrainer une perte de contrôle du véhicule et commande l'émission, pendant un délai prédéterminé, d'un appel de phare par le véhicule hôte 5 à l'intention du conducteur de l'objet mobile en approche 6, de sorte à ce que ce dernier corrige sa trajectoire.

Si l'objet mobile en approche 6 mord toujours sur la seconde marge virtuelle de sécurité 8 au terme de ce délai, le module d'actionnement 40 va alors commander l'application d'un freinage automatique d'urgence sur le véhicule hôte 5 afin d'éviter la collision.

Selon des variantes de réalisation de l'invention, la largeur de la première marge virtuelle de sécurité évolue également suivant une fonction avantageusement décroissante de la distance entre le véhicule hôte et l'objet mobile en approche. Cette fonction décroissante est par exemple de type affine ou polynomiale de deuxième ou troisième degré.

Selon d'autres variantes de réalisation, la seconde marge virtuelle peut présenter une largeur fixe.

Selon encore d'autres variantes de réalisation, la réponse d'évitement commandée par le module d'actionnement peut être différente.

On peut ainsi envisager par exemple qu'une alerte sonore, visuelle et/ou haptique soit émise dans le véhicule hôte à l'attention de son conducteur afin qu'il réalise lui-même une manœuvre d'évitement.

D'une manière générale, on rappelle que la présente invention ne se limite pas aux formes de réalisation décrites et représentées, mais qu'elle englobe toute variante d'exécution à la portée définie par les revendications annexées.

## Revendications

1. Procédé de fonctionnement d'un dispositif anticollision (10) pour véhicule automobile comportant :
- un module de détection (20) apte à identifier les objets présents au devant du véhicule hôte ainsi qu'à déterminer leur position et leur vitesse relatives vis-à-vis dudit véhicule hôte (5) ;
- un module d'évaluation du contexte environnemental de conduite (30) apte à identifier, à partir des données fournies par le module de détection (20), l'existence d'un risque de collision entre ledit véhicule hôte (5) et un objet mobile en approche (6) se déplaçant en sens inverse au sens de déplacement dudit véhicule hôte (5) sur une voie adjacente (3) à sa voie de circulation (2) ; et
- un module d'actionnement (40) apte à commander, en cas d'identification d'un risque de collision par ledit module d'évaluation du contexte environnemental de conduite (30), l'exécution par ledit véhicule hôte (5) d'une réponse d'évitement destinée à éviter la survenance d'une telle collision ;
ledit procédé comportant les étapes suivantes :
- détection, par ledit module de détection (20), de la ligne de démarcation (4) séparant la voie de circulation (2) dudit véhicule hôte (5) de celle (3) dudit objet mobile (6), et
- identification, par ledit module d'évaluation (30), de l'existence d'un risque de collision lorsque ledit véhicule hôte (5) franchit une première marge virtuelle de sécurité (7) s'étendant latéralement du côté interne de sa voie de circulation (2) depuis ladite ligne de démarcation (4), ou lorsque ledit objet mobile en approche (6) franchit une seconde marge virtuelle de sécurité (8) s'étendant latéralement du côté interne de sa voie de circulation (3) depuis ladite ligne de démarcation (4) ; **caractérisé en ce qu'** au moins l'une (8) desdites première et seconde marges virtuelles de sécurité (7, 8) présentant une largeur évolutive suivant une fonction de la distance entre ledit véhicule hôte (5) et ledit objet mobile en approche (6).

2. Procédé selon la revendication 1, **caractérisé en ce qu'**au moins l'une (7) desdites première et seconde marges virtuelles de sécurité (7, 8) présente une largeur fixe.

3. Procédé selon l'une des revendications 1 ou 2, **caractérisé en ce que** ladite fonction est décroissante.

4. Procédé selon l'une des revendications 1 à 3, **caractérisé en ce que** ladite fonction est de type affine ou polynomiale de deuxième ou de troisième degré.

5. Procédé selon l'une des revendications 1 à 4, **caractérisé en ce que** ladite réponse d'évitement est différenciée suivant que l'identification de l'existence d'un risque de collision est dû au franchissement par ledit véhicule hôte (5) de ladite première marge virtuelle de sécurité (7) ou au franchissement par ledit objet mobile en approche (6) de ladite seconde marge virtuelle de sécurité (8).

6. Procédé selon l'une des revendications 1 à 5, **caractérisé en ce qu'**il comporte, en cas de franchissement par ledit véhicule hôte (5) de ladite première marge virtuelle de sécurité (7) ou en cas de franchissement par ledit objet mobile en approche (6) de ladite seconde marge virtuelle de sécurité (8), une étape de détermination, par ledit module d'actionnement (40), de l'intensité du couple volant à exercer sur le système de direction dudit véhicule hôte (5) pour corriger sa trajectoire de sorte à éviter la collision.

7. Procédé selon la revendication 6, **caractérisé en ce qu'**il comporte, en cas de franchissement par ledit véhicule hôte (5) de ladite première marge virtuelle de sécurité (7), une étape d'application systématique, par ledit module d'actionnement (40), dudit couple volant sur le système de direction dudit véhicule hôte (5).

8. Procédé selon l'une des revendications 6 ou 7, **caractérisé en ce qu'**il comporte, en cas de franchissement par ledit objet mobile en approche (6) de ladite seconde marge virtuelle de sécurité (8) :
- si ledit couple volant est inférieur ou égal à une valeur seuil prédéterminée, une étape d'application, par ledit module d'actionnement (40), dudit couple volant sur le système de direction dudit véhicule hôte (5),
- si ledit couple volant est supérieur à ladite valeur seuil, une étape de commande, par ledit module d'actionnement (40), de l'émission d'un appel de phare par ledit véhicule hôte (5) pendant un délai prédéterminé.

9. Procédé anticollision selon la revendication 8, **caractérisé en ce qu'**il comporte, lorsque ledit objet mobile en approche (6) mord toujours sur ladite seconde marge virtuelle de sécurité (8) au terme dudit délai, une étape de commande, par ledit module d'actionnement (40), de l'application d'un freinage automatique d'urgence sur ledit véhicule hôte (5).

## Patentansprüche

1. Verfahren zum Betreiben einer Antikollisionsvorrichtung (10) für ein Kraftfahrzeug, umfassend:
- ein Erkennungsmodul (20), das in der Lage ist, vor dem Host-Fahrzeug vorhandene Objekte zu identifizieren und ihre relative Position und Geschwindigkeit in Bezug auf das Host-Fahrzeug (5) zu bestimmen;
- ein Modul zum Auswerten des Fahrumgebungskontexts (30), das in der Lage ist, anhand der vom Erkennungsmodul (20) bereitgestellten Daten das Vorhandensein einer Kollisionsgefahr zwischen dem Host-Fahrzeug (5) und einem sich nähernden beweglichen Objekt (6) zu erkennen, das sich in die entgegengesetzte Richtung zur Bewegungsrichtung des Host-Fahrzeugs (5) auf einer an seine Fahrspur (2) angrenzenden Spur (3) bewegt; und
- ein Betätigungsmodul (40), das im Falle der Erkennung einer Kollisionsgefahr durch das Modul zur Bewertung des Fahrumgebungskontexts (30) die Ausführung einer Vermeidungsreaktion durch das Trägerfahrzeug (5) steuern kann, um das Auftreten einer solchen Kollision zu verhindern;
wobei das Verfahren die folgenden Schritte umfasst:
- Erkennen der Trennlinie (4), die die Fahrspur (2) des Trägerfahrzeugs (5) von der Fahrspur (3) des mobilen Objekts (6) trennt, durch das Erkennungsmodul (20), und
- Erkennen des Vorhandenseins einer Kollisionsgefahr durch das Bewertungsmodul (30), wenn das eigene Fahrzeug (5) einen ersten virtuellen Sicherheitsabstand (7) überschreitet, der sich seitlich auf der Innenseite seiner Fahrspur (2) von der Begrenzungslinie (4) aus erstreckt, oder wenn das sich nähernde mobile Objekt (6) einen zweiten virtuellen Sicherheitsabstand (8) überschreitet, der sich seitlich auf der Innenseite seiner Fahrspur (3) von der Begrenzungslinie (4) aus erstreckt;
**dadurch gekennzeichnet, dass** mindestens einer (8) der ersten und zweiten virtuellen Sicherheitsränder (7, 8) eine Breite aufweist, die in Abhängigkeit von der Entfernung zwischen dem Trägerfahrzeug (5) und dem sich nähernden mobilen Objekt (6) variiert.

2. Verfahren nach Anspruch 1, **dadurch gekennzeichnet, dass** mindestens einer (7) der ersten und zweiten virtuellen Sicherheitsränder (7, 8) eine feste Breite aufweist.

3. Verfahren nach einem der Ansprüche 1 oder 2, **dadurch gekennzeichnet, dass** die Funktion abnehmend ist.

4. Verfahren nach einem der Ansprüche 1 bis 3, **dadurch gekennzeichnet, dass** die Funktion vom affinen oder polynomischen Typ zweiten oder dritten Grades ist.

5. Verfahren nach einem der Ansprüche 1 bis 4, **dadurch gekennzeichnet, dass** die Ausweichreaktion danach differenziert wird, ob die Feststellung einer Kollisionsgefahr auf das Überschreiten des ersten virtuellen Sicherheitsabstands (7) durch das eigene Fahrzeug (5) oder auf das Überschreiten des zweiten virtuellen Sicherheitsabstands (8) durch das sich nähernde mobile Objekt (6) zurückzuführen ist.

6. Verfahren nach einem der Ansprüche 1 bis 5, **dadurch gekennzeichnet, dass** es für den Fall, dass das Trägerfahrzeug (5) den ersten virtuellen Sicherheitsabstand (7) überschreitet oder für den Fall, dass das sich nähernde mobile Objekt (6) den zweiten virtuellen Sicherheitsabstand (8) überschreitet, einen Schritt umfasst, bei dem das Betätigungsmodul (40) die Intensität des Lenkdrehmoments bestimmt, das auf das Lenksystem des Trägerfahrzeugs (5) ausgeübt werden soll, um dessen Fahrbahn zu korrigieren und so die Kollision zu vermeiden.

7. Verfahren nach Anspruch 6, **dadurch gekennzeichnet, dass** es für den Fall, dass das Trägerfahrzeug (5) die erste virtuelle Sicherheitsmarge (7) überschreitet, einen Schritt der systematischen Anwendung des Lenkdrehmoments auf das Lenksystem des Trägerfahrzeugs (5) durch das Betätigungsmodul (40) umfasst.

8. Verfahren nach einem der Ansprüche 6 oder 7, **dadurch gekennzeichnet, dass** es für den Fall, dass das sich nähernde mobile Objekt (6) den zweiten virtuellen Sicherheitsabstand (8) überschreitet, Folgendes umfasst:
- wenn das Lenkdrehmoment kleiner oder gleich einem vorgegebenen Schwellenwert ist, ein Schritt des Aufbringens des Lenkdrehmoments auf das Lenksystem des Trägerfahrzeugs (5) durch das Betätigungsmodul (40),
- wenn das Lenkdrehmoment größer als der Schwellenwert ist, ein Schritt zum Steuern der Aussendung eines Scheinwerferlichts durch das Trägerfahrzeug (5) für eine vorbestimmte Dauer durch das Betätigungsmodul (40).

9. Antikollisionsverfahren nach Anspruch 8, **dadurch gekennzeichnet, dass** es, wenn das sich nähernde mobile Objekt (6) am Ende der Zeit immer noch in den zweiten virtuellen Sicherheitsabstand (8) eingreift, einen Schritt umfasst, bei dem das Betätigungsmodul (40) die Anwendung einer automatischen Notbremsung des Host-Fahrzeugs (5) steuert.

## Claims

1. Method for operating an anti-collision device (10) for a motor vehicle comprising:
- a detection module (20) capable of identifying objects present in front of the host vehicle and determining their relative position and speed with respect to said host vehicle (5);
- a module for evaluating the driving environment context (30) capable of identifying, from the data provided by the detection module (20), the existence of a risk of collision between said host vehicle (5) and an approaching moving object (6) moving in the opposite direction to the direction of movement of said host vehicle (5) on a lane (3) adjacent to its traffic lane (2); and
- an actuation module (40) capable of controlling, in the event of identification of a risk of collision by said driving environment context evaluation module (30), the execution by said host vehicle (5) of an avoidance response intended to prevent the occurrence of such a collision; said method comprising the following steps:
- detection, by said detection module (20), of the demarcation line (4) separating the traffic lane (2) of said host vehicle (5) from that (3) of said mobile object (6), and
- identification, by said evaluation module (30), of the existence of a risk of collision when said host vehicle (5) crosses a first virtual safety margin (7) extending laterally on the inner side of its traffic lane (2) from said demarcation line (4), or when said approaching mobile object (6) crosses a second virtual safety margin (8) extending laterally on the inner side of its traffic lane (3) from said demarcation line (4);
**characterized in that** at least one (8) of said first and second virtual safety margins (7, 8) has a width that varies according to a function of the distance between said host vehicle (5) and said approaching mobile object (6).

2. Method according to claim 1, **characterized in that** at least one (7) of said first and second virtual safety margins (7, 8) has a fixed width.

3. Method according to one of claims 1 or 2, **characterized in that** said function is decreasing.

4. Method according to one of claims 1 to 3, **characterized in that** said function is of affine type or polynomial of second or third degree.

5. Method according to one of claims 1 to 4, **characterized in that** said avoidance response is differentiated depending on whether the identification of the existence of a risk of collision is due to said host vehicle (5) crossing said first virtual safety margin (7) or to said approaching moving object (6) crossing said second virtual safety margin (8).

6. Method according to one of claims 1 to 5, **characterized in that** it comprises, in the event of said host vehicle (5) crossing said first virtual safety margin (7) or in the event of said approaching moving object (6) crossing said second virtual safety margin (8), a step of determining, by said actuation module (40), the intensity of the steering torque to be exerted on the steering system of said host vehicle (5) to correct its trajectory so as to avoid the collision.

7. Method according to claim 6, **characterized in that** it comprises, in the event of said host vehicle (5) crossing said first virtual safety margin (7), a step of systematically applying, by said actuation module (40), said steering torque to the steering system of said host vehicle (5).

8. Method according to one of claims 6 or 7, **characterized in that** it comprises, in the event of said approaching moving object (6) crossing said second virtual safety margin (8):
- if said steering wheel torque is less than or equal to a predetermined threshold value, a step of applying, by said actuation module (40), said steering wheel torque to the steering system of said host vehicle (5),
- if said steering wheel torque is greater than said threshold value, a step of controlling, by said actuation module (40), the emission of a headlight flash by said host vehicle (5) for a predetermined time period.

9. Anti-collision method according to claim 8, **characterized in that** it comprises, when said approaching moving object (6) still crosses said second virtual safety margin (8) at the end of said time period, a step of controlling, by said actuation module (40), the application of automatic emergency braking to said host vehicle (5).
